# EUROPÄISCHE PATENTANMELDUNG

(11) **EP 3 441 760 A1**
(43) Veröffentlichungstag der Anmeldung: **13.02.2019**
(21) Anmeldenummer: 18187371.2
(22) Anmeldetag: 03.08.2018
(51) Int. Cl.: G01N 33/28

(54) **BETANKUNGSVORRICHTUNG ZUM BETANKEN EINES KRAFTSTOFFTANKS EINER BRENNKRAFTMASCHINE, BETANKUNGSSYSTEM UND BETANKUNGSVERFAHREN**

(30) Priorität: 11.08.2017 DE 102017214096
(71) Anmelder: Continental Automotive GmbH, 30165 Hannover (DE)
(72) Erfinder: Kastner, Oliver, 93093 Donaustauf (DE); Avolio, Giovanni, 93051 Regensburg (DE)

(57) **Zusammenfassung**

Betankungsvorrichtung (18) mit einem ersten Kraftstoffspeicher (22) mit fossilem Kraftstoff (24) und einem zweiten Kraftstoffspeicher (26) mit synthetischem Kraftstoff (28) und mit einer Mischeinrichtung (30) zum Mischen der beiden Kraftstoffe (24, 28) zu einem vorbestimmten Kraftstoffgemisch (32), sowie mit einer Anteilskontrolleinrichtung (52) zum Kontrollieren des Anteiles an synthetischem Kraftstoff (28) in dem Kraftstoffgemisch (32). Weiter betrifft die Erfindung ein Betankungssystem (10), das die Betankungsvorrichtung (18) aufweist, sowie ein Betankungsverfahren, in dem das Betankungssystem (10) verwendet wird.

## Beschreibung

Die Erfindung betrifft eine Betankungsvorrichtung zum Betanken eines Kraftstofftanks einer Brennkraftmaschine, ein Betankungssystem, das eine solche Betankungsvorrichtung aufweist, sowie ein Betankungsverfahren, mit dem ein Kraftstofftank einer Brennkraftmaschine mit einem Kraftstoffgemisch betankt werden kann.

Heutzutage auf dem Markt befindliche Brennkraftmaschinen, beispielsweise bei Fahrzeugen mit Verbrennungsmotoren wie Benzin- und Dieselmotoren, stehen an Tankstellen standardisierte Betankungsvorrichtungen zur Verfügung, über die der jeweils benötigte flüssige Kraftstoff in einen Kraftstofftank der jeweiligen Brennkraftmaschine - des jeweiligen Fahrzeuges - getankt werden kann. Benzin bzw. Diesel können heute in verschiedenen Verblendungen gefahren werden. Für die beiden flüssigen Kraftstoffarten sind daher an den Tankstellen zumeist jeweils zwei bis drei Kraftstoffgemische vorhanden, die nach Kundenwunsch getankt werden können. Der Kunde hat dabei lediglich darauf zu achten, einen Benzinmotor mit Benzin und einen Dieselmotor mit Diesel zu betanken, ansonsten gibt es keinerlei Vorschriften bezüglich der zwingend zu tankenden Verblendung. Die Kompatibilität der beiden Brennkraftmaschinentypen mit den zur Verfügung gestellten Kraftstoffen ist immer gewährleistet.

Aufgrund für den Klimaschutz erforderlicher CO₂-Reduktionsziele werden in Zukunft jedoch auch Kraftstoffgemische angeboten werden, die aus den bisher bekannten erdölbasierten bzw. fossilen Kraftstoffen wie Benzin und/oder Diesel und zusätzlich synthetisch hergestellten Kraftstoffen zusammengesetzt sind. Unter fossilen Kraftstoffen sollen dabei alle Kraftstoffe verstanden werden, die durch eine Raffination von Rohöl, d. h. Erdöl, gewonnen werden. Darunter fallen sowohl Dieselkraftstoffe als auch Benzinkraftstoffe, aber auch alle anderen bekannten standardmäßig verfügbaren Kraftstoffe auf Basis von Rohöl.

Unter synthetischen Kraftstoffen sollen solche Kraftstoffe verstanden werden, die durch menschliche Hand über eine kontrollierte chemische Reaktion erzeugt worden sind. Insbesondere sollen dabei solche Kraftstoffe verstanden werden, die unter Verwendung von bereits in der Umgebung frei verfügbarem CO₂ und elektrischer Energie aus erneuerbaren Energiequellen erzeugt worden sind.

Um die CO₂-Reduktion für eine Beurteilung des Flottenverbrauches eines Fahrzeugherstellers messbar und auch vorhersagbar zu machen, ist es notwendig, dass Fahrzeuge bzw. deren Brennkraftmaschinen nur noch mit einem für diese Brennkraftmaschine spezifizierten und zugelassenen Kraftstoffgemisch betankt werden. Es besteht jedoch das Problem, dass für verschiedene Brennkraftmaschinentypen, d. h. unterschiedliche Fahrzeuge, unterschiedliche Kraftstoffgemische benötigt werden. Dabei ist das benötigte Kraftstoffgemisch jeweils konstant bzw. nur in einem sehr kleinen Bereich variierbar.

Aufgabe der Erfindung ist es daher, eine Betankungsvorrichtung zum Betanken eines Kraftstofftanks einer Brennkraftmaschine mit einem Kraftstoffgemisch aus einem fossilen Kraftstoff und einem synthetischen Kraftstoff bereitzustellen.

Diese Aufgabe wird mit einer Betankungsvorrichtung mit der Merkmalskombination des Anspruches 1 gelöst.

Ein Betankungssystem, dass die Betankungsvorrichtung aufweist, sowie ein Betankungsverfahren sind Gegenstand der nebengeordneten Ansprüche.

Vorteilhafte Ausgestaltungen der Erfindung sind Gegenstand der abhängigen Ansprüche.

Eine Betankungsvorrichtung zum Betanken eines Kraftstofftanks einer Brennkraftmaschine weist einen ersten Kraftstoffspeicher zum Speichern eines fossilen Kraftstoffes, einen zweiten Kraftstoffspeicher zum Speichern eines synthetischen Kraftstoffes und eine Mischeinrichtung zum Mischen des fossilen Kraftstoffes aus dem ersten Kraftstoffspeicher mit dem synthetischen Kraftstoff aus dem zweiten Kraftstoffspeicher zu einem Kraftstoffgemisch auf, wobei die Mischeinrichtung eine Einstelleinrichtung zum Einstellen eines vorbestimmten Anteiles an synthetischem Kraftstoff in dem Kraftstoffgemisch aufweist. Zusätzlich umfasst die Betankungsvorrichtung eine Kraftstoffgemischzuführeinrichtung zum Zuführen des Kraftstoffgemischs zu dem Kraftstofftank und eine Anteilskontrolleinrichtung zum Kontrollieren des Anteiles an synthetischem Kraftstoff in dem zu dem Kraftstofftank zuzuführenden Kraftstoffgemisch.

Beispielsweise kann die Betankungsvorrichtung eine standardmäßig vorhandene Zapfsäule an einer Tankstelle sein, die flexibel ausgestaltet ist. Dazu sind an der beispielhaften Tankstelle wenigstens zwei Kraftstofftanks vorhanden, nämlich einerseits der erste Kraftstoffspeicher zum Speichern des fossilen Kraftstoffes, und andererseits der zweite Kraftstoffspeicher zum Speichern des synthetischen Kraftstoffes. Dabei ist eine Mischeinrichtung vorhanden, beispielsweise angeordnet in der Zapfsäule, die mit beiden Kraftstoffspeichern verbunden ist und somit das Einstellen eines beliebigen Kraftstoffgemisches zwischen den beiden Kraftstoffarten ermöglicht. Daher weist die Mischeinrichtung die Einstelleinrichtung auf, um dem fossilen Kraftstoff einen ganz bestimmten vorbestimmten Anteil an synthetischem Kraftstoff zuzumischen, um für die zu betankende Brennkraftmaschine das spezifisch vorgegebene Kraftstoffverhältnis aus fossilem Kraftstoff und synthetischem Kraftstoff einzustellen.

Bei fossilen Kraftstoffen kann es sich beispielsweise um Diesel oder Benzin handeln, die jeweils auch in verschiedenen Spezifikationen vorliegen können.

Vorzugsweise ist in dem ersten Kraftstoffspeicher zu 100% fossiler Kraftstoff angeordnet.

Bei den synthetischen Kraftstoffen kann es sich beispielsweise um Oxymethylenether (OME, DME), Methanol, Dimethylcarbonat (DMC) oder Dimethylcarbonat/Methylformiat (DMC+) in verschiedenen Spezifikationen handeln.

Der zweite Kraftstoffspeicher weist vorteilhaft zu 100% den synthetischen Kraftstoff auf.

Über die Anteilskontrolleinrichtung ist es möglich, ein Kraftstoffgemisch daraufhin zu kontrollieren bzw. zu überprüfen, ob es sich um ein für die Betankung einer spezifischen Brennkraftmaschine erlaubtes und zugelassenes Kraftstoffgemisch aus synthetischem Kraftstoff und fossilem Kraftstoff handelt.

Die Anteilskontrolleinrichtung weist eine Ist-Erfassungseinrichtung zum Erfassen eines Ist-Anteiles an synthetischem Kraftstoff in dem Kraftstoffgemisch, eine Soll-Erfassungseinrichtung zum Erfassen eines Soll-Anteiles an synthetischem Kraftstoff in dem Kraftstoffgemisch und eine Abgleicheinrichtung zum Abgleichen des Ist-Anteiles mit dem Soll-Anteil an synthetischem Kraftstoff in dem Kraftstoffgemisch auf.

Die Anteilskontrolleinrichtung weist eine Freigabeeinrichtung zum Freigeben oder Sperren der Kraftstoffgemischzuführeinrichtung auf, wobei die Freigabeeinrichtung dazu ausgebildet ist, die Kraftstoffgemischzuführeinrichtung zu sperren, wenn der erfasste Ist-Anteil an synthetischem Kraftstoff in dem Kraftstoffgemisch von dem erfassten Soll-Anteil um mehr als eine vorbestimmte zulässige Toleranzabweichung abweicht.

Vorzugsweise weist die Einstelleinrichtung eine Anteilsbestimmungseinrichtung zum Vorbestimmen des Anteils an synthetischem Kraftstoff in dem Kraftstoffgemisch auf, wobei die Anteilsbestimmungseinrichtung zum Vorbestimmen des zu dem fossilen Kraftstoff zuzumischenden Anteils an synthetischem Kraftstoff in Abhängigkeit des zu betankenden Brennkraftmaschinentyps ausgebildet ist.

In vorteilhafter Ausgestaltung weist die Anteilsbestimmungseinrichtung eine Erfassungseinrichtung zum Erfassen des Brennkraftmaschinentyps der zu betankenden Brennkraftmaschine auf.

Die Anteilsbestimmungseinrichtung ist über die Erfassungseinrichtung dazu in der Lage, zu erkennen, welches Fahrzeug bzw. welcher darin enthaltene Brennkraftmaschinentyp mit einem spezifischen Kraftstoffgemisch betankt werden soll. Aus dieser erfassten Information kann die Anteilsbestimmungseinrichtung bestimmen, wie viel synthetischer Kraftstoff zu dem fossilen Kraftstoff hinzugemischt werden muss, um das gewünschte Kraftstoffgemisch zu erzielen.

Beispielsweise weist die Erfassungseinrichtung eine Eingabeeinrichtung zum manuellen Eingeben des Brennkraftmaschinentyps auf. In einer solchen Ausführungsform kann die Erfassungseinrichtung beispielsweise über eine Benutzerschnittstelle ähnlich eines Pinpads ausgestaltet sein, in das der Benutzer Zahlen und/oder Buchstaben eingeben kann. Es ist auch möglich, entsprechende Piktogrammtasten oder einen Drehauswahlknopf zur Verfügung zu stellen, anhand dessen der Benutzer den Brennkraftmaschinentyp von Hand in die Erfassungseinrichtung eingeben kann.

Alternativ ist jedoch auch denkbar, dass die Erfassungseinrichtung zum automatischen Auslesen des Brennkraftmaschinentyps ausgebildet ist und dazu beispielsweise einen Barcodeleser oder einen RFID-Leser oder eine Infrarot- oder Bluetooth-Schnittstelle aufweist.

Ein Betankungssystem zum Betanken eines Kraftstofftanks einer Brennkraftmaschine mit einem Kraftstoffgemisch weist die oben beschriebene Betankungsvorrichtung sowie ein Fahrzeug auf, das die Brennkraftmaschine mit dem Kraftstofftank umfasst, wobei das Fahrzeug eine Identifikationseinrichtung zum Identifizieren eines Brennkraftmaschinentyps der Brennkraftmaschine aufweist.

Vorzugsweise kann die Identifikationseinrichtung mit der Erfassungseinrichtung der Mischeinrichtung der Betankungsvorrichtung kommunizieren.

Dazu kann die Identifikationseinrichtung beispielsweise einen Barcode oder einen RFID-Chip oder eine Infrarot- oder Bluetooth-Schnittstelle aufweisen. Dadurch kann automatisch der Brennkraftmaschinentyp zwischen einem entsprechenden Empfänger der Erfassungseinrichtung und der Identifikationseinrichtung kommuniziert werden.

Alternativ ist es jedoch auch möglich, dass die Identifikationseinrichtung lediglich eine Angabe über einen Zahlen- und/oder Buchstabencode oder ein zugeordnetes Piktogramm aufweist.

Über die Identifikationseinrichtung ist es möglich, jedem Brennkraftmaschinentyp, und somit jedem Fahrzeug ein eindeutiges Kraftstoffgemisch zuzuordnen, das getankt werden darf. Wenn jedes Fahrzeug eine solche Identifikationseinrichtung für das jeweilige Kraftstoffgemisch mit sich führt, kann diese vor der Betankung gelesen werden.

Somit ist eine flexible Betankung sämtlicher Brennkraftmaschinentypen und somit sämtlicher Fahrzeuge, die unterschiedliche Kraftstoffgemische in unterschiedlichen Mischungsverhältnissen benötigen, an einer einzigen Betankungsvorrichtung möglich. Zudem ist mit dieser Vorgehensweise garantiert, dass ein Brennkraftmaschinentyp nur genau das Mischungsverhältnis und somit das Kraftstoffgemisch tanken kann, für das er auch zugelassen ist. Eine flexible Betankung ist möglich an einer einzigen Zapfsäule als Betankungsvorrichtung für sämtliche Fahrzeuge, die unterschiedliche Kraftstoffgemische benötigen.

Es ist möglich, dass die Betankungsvorrichtung so ausgebildet ist, dass der Betankungsvorgang erst dann freigegeben werden kann, wenn der Brennkraftmaschinentyp eindeutig identifiziert ist. Bei einer nötigen manuellen Eingabe beispielsweise eines Pincodes an der Betankungsvorrichtung kann der Betankungsvorgang erst dann gestartet werden, wenn der Pincode verpflichtend manuell eingegeben ist.

Die Anteilskontrolleinrichtung ist zum Kommunizieren mit der Identifikationseinrichtung ausgebildet, um einen Soll-Anteil an synthetischen Kraftstoff in dem Kraftstoffgemisch zu erfassen.

Damit ist es möglich, eine Fehlnutzung der Betankungsvorrichtung zu verhindern, indem jeweils beispielsweise in eine Zapfpistole, die die Kraftstoffgemischzuführeinrichtung bildet, ein entsprechender Kraftstoffsensor eingebaut wird. Zusätzlich oder alternativ kann ein solcher Kraftstoffsensor auch in einem Tankstutzen des Fahrzeugs eingebaut werden. Diese Kraftstoffsensoren messen dann die Zusammensetzung des Kraftstoffgemischs und können somit garantieren, dass nur das Kraftstoffgemisch in das Fahrzeug gelangt, für das das Fahrzeug spezifiziert ist. Wenn ein anderes Kraftstoffgemisch getankt werden soll, kommuniziert das Fahrzeug über die Identifikationseinrichtung dies zur Kraftstoffgemischzuführeinrichtung, woraufhin der Betankungsvorgang beendet wird.

Mit dieser Vorgehensweise ist garantiert, dass ein Fahrzeug nur das Kraftstoffgemisch in einem vorbestimmten Mischungsverhältnis tanken kann, für das es auch zugelassen ist. Somit kann die Betankung von Fahrzeugen, die ein bestimmtes definiertes Mischungsverhältnis aus zwei Kraftstoffarten benötigen, überprüft und garantiert werden.

Vorteilhaft ist die Identifikationseinrichtung in einem Bereich eines Tankstutzens des Fahrzeuges, der im Betrieb mit der Kraftstoffgemischzuführeinrichtung zum Zuführen des Kraftstoffgemischs zu dem Kraftstofftank zusammenwirkt, angeordnet.

Die Kraftstoffgemischzuführeinrichtung, die insbesondere eine Zapfsäule mit einer Tankpistole aufweist, weist die Anteilskontrolleinrichtung auf.

Alternativ oder zusätzlich ist es jedoch auch möglich, dass ein Tankstutzen des Fahrzeuges, der im Betrieb mit der Kraftstoffgemischzuführeinrichtung zum Zuführen des Kraftstoffgemischs zu dem Kraftstofftank zusammenwirkt, die Anteilskontrolleinrichtung aufweist.

Bei einem Betankungsverfahren zum Betanken eines Kraftstofftanks einer Brennkraftmaschine mit einem Kraftstoffgemisch werden die folgenden Schritte durchgeführt:
- Bereitstellen eines oben beschriebenen Betankungssystems;
- Erfassen eines Brennkraftmaschinentyps der zu betankenden Brennkraftmaschine;
- Vorbestimmen eines Anteiles an synthetischem Kraftstoff in dem Kraftstoffgemisch abhängig von dem erfassten Brennkraftmaschinentyp;
- Zumischen des vorbestimmten Anteiles an synthetischem Kraftstoff zu einem fossilen Kraftstoff zum Bilden des Kraftstoffgemischs;
- Kontrollieren des zu dem Kraftstofftank zuzuführenden Kraftstoffgemischs, wobei ein Ist-Anteil an synthetischem Kraftstoff in dem Kraftstoffgemisch mit einem Soll-Anteil an synthetischem Kraftstoff in dem Kraftstoffgemisch abgeglichen wird,
wobei eine Kraftstoffgemischzuführeinrichtung zum Zuführen des Kraftstoffgemischs zu dem Kraftstofftank freigegeben wird, wenn der Ist-Anteil um maximal eine vorbestimmte zulässige Toleranzabweichung von dem Soll-Anteil abweicht,
oder
wobei eine Kraftstoffgemischzuführeinrichtung zum Zuführen des Kraftstoffgemischs zu dem Kraftstofftank gesperrt wird, wenn der Ist-Anteil um mehr als eine vorbestimmte zulässige Toleranzabweichung von dem Soll-Anteil abweicht.

Es ist möglich, durch Verwendung von sogenannten E-Fuels, das heißt synthetischen Kraftstoffen, die unter Verwendung von elektrischer Energie aus erneuerbaren Energiequellen und der Verwendung von CO₂ aus der Umwelt hergestellt worden sind, die CO₂-Bilanz deutlich zu verbessern. Bei der Verwendung von Kraftstoffgemischen aus solchen sogenannten E-Fuels und fossilen Kraftstoffen auf Erdölbasis kann durch das beschriebene Betankungsverfahren für sämtliche sich im Betrieb befindlichen Fahrzeuge berechnet werden, wie hoch das CO₂-Reduktionspotential ist. Denn der Anteil an synthetischen Kraftstoffen, sogenannten E-Fuels, ist dann fahrzeugspezifisch vorgeschrieben und kann garantiert werden.

Eine vorteilhafte Ausgestaltung der Erfindung wird nachfolgend anhand der beigefügten Zeichnungen näher erläutert. Darin zeigt:
- Fig. 1: eine schematische Übersichtsdarstellung eines Betankungssystems zum Betanken eines Kraftstofftanks einer Brennkraftmaschine; und
- Fig. 2: ein Flussdiagramm, das Schritte zum Durchführen eines Betankungsverfahrens zum Betanken der Brennkraftmaschine aus Fig. 1 mit einem spezifischen Kraftstoffgemisch darstellt.

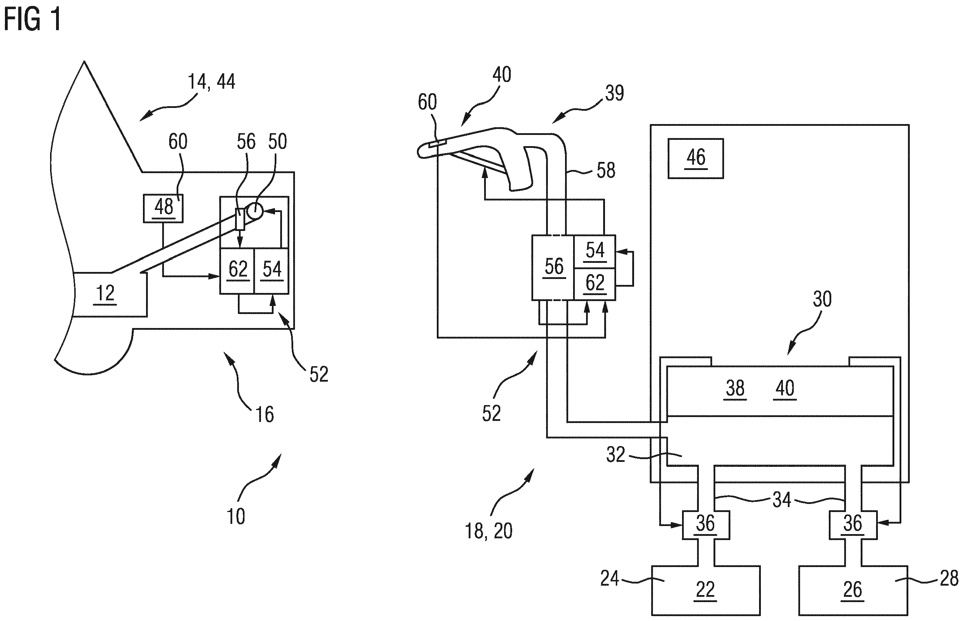

Fig. 1 zeigt eine schematische Übersichtsdarstellung eines Betankungssystems 10, mit dem ein Kraftstofftank 12 einer Brennkraftmaschine 14, die in einem Fahrzeug 16 angeordnet sind, flexibel betankt werden kann.

Das Betankungssystem 10 weist dazu eine Betankungsvorrichtung 18, beispielsweise eine Zapfsäule 20 auf, in der ein erster Kraftstoffspeicher 22 mit einem fossilen Kraftstoff 24 und ein zweiter Kraftstoffspeicher 26 mit einem synthetischen Kraftstoff 28 vorhanden sind. Weiter weist die Betankungsvorrichtung 18 eine Mischeinrichtung 30 auf, mit der dem fossilen Kraftstoff 24 aus dem ersten Kraftstoffspeicher 22 gezielt ein vorbestimmter Anteil an synthetischem Kraftstoff 28 aus dem zweiten Kraftstoffspeicher 26 zum Bilden eines Kraftstoffgemisches 32 zugemischt werden kann.

Die Mischeinrichtung 30 ist hierzu über entsprechende Verbindungen 34, beispielsweise über Rohre oder Schläuche, jeweils mit den beiden Kraftstoffspeichern 22, 26 verbunden. Innerhalb dieser Verbindungen 34 sind entsprechende Pumpen 36 angeordnet, die den jeweiligen Kraftstoff 24, 28 aus dem jeweiligen Kraftstoffspeicher 22, 26 in die Mischeinrichtung 30 pumpen können. Um flexibel den Anteil an synthetischem Kraftstoff 28 in dem Kraftstoffgemisch 32 einstellen zu können, weist die Mischeinrichtung 30 eine Einstelleinrichtung 38 auf, die abhängig von einem zuvor bestimmten Anteil an synthetischem Kraftstoff 28, der in dem Kraftstoffgemisch 32 vorhanden sein soll, entsprechende Signale an die beiden Pumpen 36 ausgibt, um einen Volumenstrom des jeweiligen Kraftstoffes 24, 28 aus dem jeweiligen Kraftstoffspeicher 22, 26 einzustellen.

Nach Mischen des Kraftstoffgemisches 32 in der Mischeinrichtung 30 wird dieses Kraftstoffgemisch 32 dann zum Betanken des Kraftstofftanks 12 der Brennkraftmaschine 14 mit einer Kraftstoffgemischzuführeinrichtung 39, beispielsweise mit einer Tankpistole 40, zugeleitet.

In der Einstelleinrichtung 38 ist eine Anteilsbestimmungseinrichtung 42 vorgesehen, die den Anteil an synthetischem Kraftstoff 28, der in dem Kraftstoffgemisch 32 vorhanden sein soll, vorbestimmen kann abhängig davon, welcher Brennkraftmaschinentyp 44 betankt werden soll.

Dazu weist die Anteilsbestimmungseinrichtung 42 eine entsprechende Erfassungseinrichtung 46 auf, die den Brennkraftmaschinentyp 44 der zu betankenden Brennkraftmaschine 14 erfasst.

Entsprechend weist das Fahrzeug 16 eine Identifikationseinrichtung 48 auf, über die es möglich ist, auszulesen, um welchen Brennkraftmaschinentyp 44, der betankt werden soll, es sich handelt.

In der vorliegend gezeigten Ausführungsform ist die Erfassungseinrichtung 46 zum automatischen Auslesen des Brennkraftmaschinentyps 44 ausgebildet. Beispielsweise kann es sich dabei um einen Barcodeleser handeln, der, wenn die Identifikationseinrichtung 48 als Barcode ausgebildet ist, diesen Barcode erfassen kann. Es ist auch möglich, die Erfassungseinrichtung 46 als RFID-Leser oder als Infrarot- oder Bluetooth-Schnittstelle auszubilden, wenn die Identifikationseinrichtung 48 entsprechend als RFID-Chip oder ebenfalls als Infrarot- oder Bluetooth-Schnittstelle ausgebildet ist.

Alternativ ist es jedoch auch möglich, die Identifikationseinrichtung 48 lediglich als einen Aufkleber auszubilden, auf dem ein entsprechender Buchstaben- und/oder Zahlencode oder ein entsprechendes Piktogramm angegeben ist, das in eine an der Betankungsvorrichtung 18 angeordneten Eingabeeinrichtung (in dieser Ausführungsform nicht gezeigt) eingegeben werden kann.

Vorliegend ist die Identifikationseinrichtung 48 in der Nähe eines Tankstutzens 50 des Fahrzeugs 16 angeordnet, der im Betrieb mit der Tankpistole 40 zum Zuführen des Kraftstoffgemisches 32 zu dem Kraftstofftank 12 zusammenwirkt.

Alternativ ist jedoch auch möglich, die Identifikationseinrichtung 48 an einem Fahrzeugschlüssel anzuordnen, der entsprechend ausgelesen werden muss, oder auch an einem Karosserie- oder Fahrgastzellenbauteil wie beispielsweise einer Frontscheibe, dem Dach oder sonstigen gut zugänglichen bzw. gut einsehbaren Bereichen des Fahrzeuges 16.

Die Erfassungseinrichtung 46 kann somit den Brennkraftmaschinentyp 44, der betankt werden soll, erfassen, sodass die Anteilsbestimmungseinrichtung 42 auf Basis dieser Information bestimmen kann, welcher exakte Anteil an synthetischem Kraftstoff 28 dem fossilen Kraftstoff 24 zugemischt werden muss, um das gewünschte Kraftstoffgemisch 32, das spezifisch und zugelassen für diesen speziellen Brennkraftmaschinentypen 44 ist, tanken zu können. Entsprechend der Information der Anteilsbestimmungseinrichtung 42 stellt dann die Einstelleinrichtung 38 über die Mischeinrichtung 30 das Kraftstoffgemisch 32 ein, das dann über die Kraftstoffgemischzuführeinrichtung 39, nämlich die Tankpistole 40, und den Tankstutzen 50 an dem Fahrzeug 16, in den Kraftstofftank 12 eingeleitet werden kann.

Somit ist es möglich, über eine einzelne Betankungsvorrichtung 18 eine Vielzahl an unterschiedlichen Brennkraftmaschinentypen 44 mit unterschiedlichen zugelassenen und spezifischen Kraftstoffgemischen 32 korrekt zu betanken.

Um sicherzugehen, dass auch tatsächlich das richtige gewünschte Kraftstoffgemisch 32 in den Kraftstofftank 12 eingetankt wird, weist das Betankungssystem 10 zusätzlich eine Anteilskontrolleinrichtung 52 auf, die das bereits gemischte Kraftstoffgemisch 32 auf Korrektheit kontrolliert. Die Anteilskontrolleinrichtung 52 kontrolliert dabei den Anteil an synthetischem Kraftstoff 28 in dem Kraftstoffgemisch 32, das dem Kraftstofftank 12 zugeführt werden soll. Entspricht das Kraftstoffgemisch 32 der gewünschten Spezifikation, dann kann die Anteilskontrolleinrichtung 52 über eine Freigabeeinrichtung 54 den Betankungsvorgang freigeben. Ist dies jedoch nicht der Fall, kann die Anteilskontrolleinrichtung 52 über die Freigabeeinrichtung 54 den Betankungsvorgang auch sperren.

Dadurch ist es möglich, eine Fehlnutzung der Betankungsvorrichtung 18, beispielsweise durch eine Falscheingabe bei einer manuellen Eingabe des Benutzers in die Erfassungseinrichtung 46, zu verhindern. Damit kann zusätzlich garantiert werden, dass nur das Kraftstoffgemisch 32 in das Fahrzeug 16 gelangt, für das es spezifiziert ist. Wenn ein anderes Kraftstoffgemisch 32 getankt werden soll, kann der Betankungsvorgang frühzeitig beendet werden.

Um zu erkennen, ob das Kraftstoffgemisch 32 in der korrekten Mischung vorliegt, weist die Anteilskontrolleinrichtung 52 eine Ist-Erfassungseinrichtung 56 auf, mit der ein Ist-Anteil an synthetischem Kraftstoff 28 in dem Kraftstoffgemisch 32 erfasst werden kann. Diese Ist-Erfassungseinrichtung 56 ist beispielsweise an einem Schlauch 58 angeordnet, der zur Tankpistole 40 führt, und wird von dem Kraftstoffgemisch 32 durchflossen, sodass dessen Anteil an synthetischem Kraftstoff 28 leicht erfasst werden kann.

Weiter weist die Anteilskontrolleinrichtung 52 eine Soll-Erfassungseinrichtung 60 auf, mit der der Anteil an synthetischem Kraftstoff 28 erfasst werden kann, der in dem Kraftstoffgemisch 32 zwingend vorliegen muss.

Weiter beinhaltet die Anteilskontrolleinrichtung 52 eine Abgleicheinrichtung 62, die den erfassten Ist-Anteil mit dem erfassten Soll-Anteil vergleicht. In der Anteilskontrolleinrichtung 52 ist die Freigabeeinrichtung 54 angeordnet, die die Kraftstoffgemischzuführeinrichtung 39, beispielsweise die Tankpistole 40, dann sperren kann, wenn der erfasste Ist-Anteil von dem erfassten Soll-Anteil abweicht. Dabei kann eine zulässige Toleranzabweichung vorbestimmt werden, um die der erfasste Anteil schwanken darf, bevor die Sperrung des Betankungsvorgangs einsetzt.

Es ist auch möglich, die Anteilskontrolleinrichtung 52 direkt an dem Fahrzeug 16, beispielsweise in der Nähe des Tankstutzens 50 vorzusehen. Dabei kann die Ist-Erfassungseinrichtung 56 direkt an dem Tankstutzen 50 angeordnet oder in dem Tankstutzen 50 integriert sein. Eine an dem Fahrzeug 16 angebrachte Abgleicheinrichtung 62 vergleicht dann den Soll-Anteil an synthetischem Kraftstoff 28, der über die Identifikationseinrichtung 48 vorgegeben ist, mit dem erfassten Ist-Anteil in dem zuzutankenden Kraftstoffgemisch 32 und gibt ein entsprechendes Signal an eine Freigabeeinrichtung 54, wenn das Kraftstoffgemisch 32 den Anforderungen entspricht. Die Freigabeeinrichtung 54 sperrt den Tankstutzen 54 bzw. gibt ihn entsprechend frei.

Die Anteilskontrolleinrichtung 52 ist demgemäß zum Kommunizieren mit der Identifikationseinrichtung 48 des Fahrzeuges 16 ausgebildet, egal ob die Anteilskontrolleinrichtung 52 an dem Fahrzeug 16 selbst oder an der Betankungsvorrichtung 18 angeordnet.

Die Betankung von Fahrzeugen 16, die ein bestimmtes definiertes Kraftstoffgemisch 32 aus zwei Kraftstoffarten benötigen, kann somit überprüft und garantiert werden.

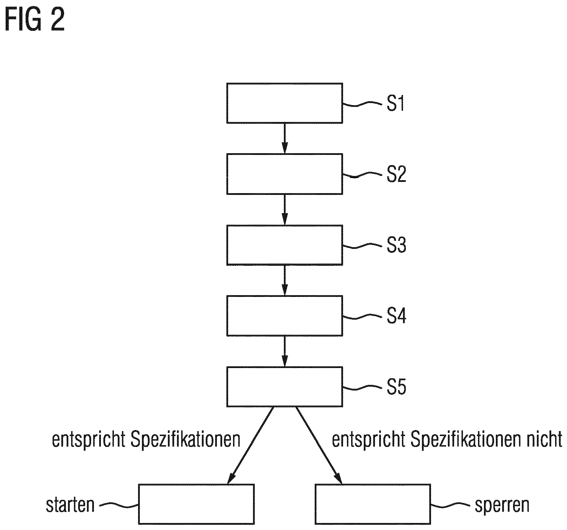

Fig. 2 zeigt in einem Flussdiagramm Schritte eines entsprechenden Verfahrens, das das Betankungssystem 10 durchführt, um den Kraftstofftank 12 der Brennkraftmaschine 14 in dem Fahrzeug 16 zu betanken.

In einem ersten Schritt S1 wird dabei das Betankungssystem 10 bereitgestellt, und zwar derart, dass eine Betankungsvorrichtung 18 einen Brennkraftmaschinentyp 44 erfassen kann. In einem zweiten Schritt S2 erfasst dann die Betankungsvorrichtung 18 den Brennkraftmaschinentyp 44. In einem dritten Schritt S3 wird über die Anteilsbestimmungseinrichtung 42 der Anteil an synthetischem Kraftstoff 28 bestimmt, der mit fossilem Kraftstoff 24 zu einem Kraftstoffgemisch 32 vermischt werden soll, um das benötigte Kraftstoffgemisch 32 für den spezifischen Brennkraftmaschinentyp 44 bereitstellen zu können. Nach Bestimmung dieses Anteiles in S3 wird der synthetische Kraftstoff 28 in einem vierten Schritt S4 in dem gewünschten Anteil zu dem fossilen Kraftstoff 24 zugemischt.

In einem weiteren, fünften Schritt S5 wird das erzeugte Kraftstoffgemisch 32 mit seinen Spezifikationen kontrolliert, indem die Anteilskontrolleinrichtung 52 anhand der Identifikationseinrichtung 48 an dem Fahrzeug 16 überprüft, ob sich in der Kraftstoffgemischzuführeinrichtung 39 tatsächlich das richtige gewünschte Kraftstoffgemisch 32 befindet.

In dem Fall, dass das Kraftstoffgemisch 32 bis auf eine geringfügige Toleranzabweichung der Spezifikation entspricht, wird der Betankungsvorgang gestartet. In dem Fall, dass der Anteil an synthetischem Kraftstoff 28 in dem erzeugten Kraftstoffgemisch 32 eine zulässige vorbestimmte Toleranzabweichung überschreitet, wird der Betankungsvorgang gesperrt.

## Patentansprüche

1. Betankungsvorrichtung (18) zum Betanken eines Kraftstofftanks (12) einer Brennkraftmaschine (14), aufweisend
- einen ersten Kraftstoffspeicher (22) zum Speichern eines fossilen Kraftstoffes (24);
- einen zweiten Kraftstoffspeicher (26) zum Speichern eines synthetischen Kraftstoffes (28);
- eine Mischeinrichtung (30) zum Mischen des fossilen Kraftstoffes (24) aus dem ersten Kraftstoffspeicher (22) mit dem synthetischen Kraftstoff (28) aus dem zweiten Kraftstoffspeicher (26) zu einem Kraftstoffgemisch (32), wobei die Mischeinrichtung (30) eine Einstelleinrichtung zum Einstellen eines vorbestimmten Anteiles an synthetischem Kraftstoff (28) in dem Kraftstoffgemisch (32) aufweist;
- eine Kraftstoffgemischzuführeinrichtung (39) zum Zuführen des Kraftstoffgemischs (32) zu dem Kraftstofftank (12); und
- eine Anteilskontrolleinrichtung (52) zum Kontrollieren des Anteiles an synthetischem Kraftstoff (28) in dem zu dem Kraftstofftank (12) zuzuführenden Kraftstoffgemisch (32).

2. Betankungsvorrichtung (18) nach Anspruch 1,
**dadurch gekennzeichnet, dass** die Anteilskontrolleinrichtung (52) eine Ist-Erfassungseinrichtung (56) zum Erfassen eines Ist-Anteiles an synthetischem Kraftstoff (28) in dem Kraftstoffgemisch (32), eine Soll-Erfassungseinrichtung (60) zum Erfassen eines Soll-Anteiles an synthetischem Kraftstoff (28) in dem Kraftstoffgemisch (32) und eine Abgleicheinrichtung (62) zum Abgleichen des Ist-Anteiles mit dem Soll-Anteil an synthetischem Kraftstoff (28) in dem Kraftstoffgemisch (32) aufweist.

3. Betankungsvorrichtung (18) nach Anspruch 2,
**dadurch gekennzeichnet, dass** die Anteilskontrolleinrichtung (52) eine Freigabeeinrichtung (54) zum Freigeben oder Sperren der Kraftstoffgemischzuführeinrichtung (39) aufweist, wobei die Freigabeeinrichtung (54) dazu ausgebildet ist, die Kraftstoffgemischzuführeinrichtung (39) zu sperren, wenn der erfasste Ist-Anteil an synthetischem Kraftstoff (28) in dem Kraftstoffgemisch (32) von dem erfassten Soll-Anteil um mehr als eine vorbestimmte zulässige Toleranzabweichung abweicht.

4. Betankungssystem (10) zum Betanken eines Kraftstofftanks (12) einer Brennkraftmaschine (14) mit einem Kraftstoffgemisch (32), aufweisend:
- eine Betankungsvorrichtung (18) nach einem der Ansprüche 1 bis 3; und
- ein Fahrzeug, aufweisend die Brennkraftmaschine (14) mit dem Kraftstofftank (12), wobei das Fahrzeug eine Identifikationseinrichtung (48) zum Identifizieren eines Brennkraftmaschinentyps (44) der Brennkraftmaschine (14) aufweist,
wobei die Anteilskontrolleinrichtung (52) zum Kommunizieren mit der Identifikationseinrichtung (48) ausgebildet ist, um einen Soll-Anteil an synthetischem Kraftstoff (28) in dem Kraftstoffgemisch (32) zu erfassen.

5. Betankungssystem (10) nach Anspruch 4,
**dadurch gekennzeichnet, dass** die Identifikationseinrichtung (48) in einem Bereich eines Tankstutzens (50) des Fahrzeuges (16), der im Betrieb mit der Kraftstoffgemischzuführeinrichtung (39) zum Zuführen des Kraftstoffgemischs (32) zu dem Kraftstofftank (12) zusammenwirkt, angeordnet ist.

6. Betankungssystem (10) nach einem der Ansprüche 4 oder 5, **dadurch gekennzeichnet, dass** die Kraftstoffgemischzuführeinrichtung (39), die insbesondere eine Zapfsäule (20) mit einer Tankpistole (40) aufweist, die Anteilskontrolleinrichtung (52) aufweist und/oder dass ein Tankstutzen (50) des Fahrzeugs (16), der im Betrieb mit der Kraftstoffgemischzuführeinrichtung (39) zum Zuführen des Kraftstoffgemischs (32) zu dem Kraftstofftank (12) zusammenwirkt, die Anteilskontrolleinrichtung (52) aufweist.

7. Betankungsverfahren zum Betanken eines Kraftstofftanks (12) einer Brennkraftmaschine (14) mit einem Kraftstoffgemisch (32), aufweisend die Schritte:
- Bereitstellen eines Betankungssystems (10) nach einem der Ansprüche 4 bis 6;
- Erfassen eines Brennkraftmaschinentyps (44) der zu betankenden Brennkraftmaschine (14);
- Vorbestimmen eines Anteiles an synthetischem Kraftstoff (28) in dem Kraftstoffgemisch (32) abhängig von dem erfassten Brennkraftmaschinentyp (44);
- Zumischen des vorbestimmten Anteiles an synthetischem Kraftstoff (28) zu einem fossilen Kraftstoff (24) zum Bilden des Kraftstoffgemischs (32);
- Kontrollieren des zu dem Kraftstofftank (12) zuzuführenden Kraftstoffgemischs (32), wobei ein Ist-Anteil an synthetischem Kraftstoff (28) in dem Kraftstoffgemisch (32) mit einem Soll-Anteil an synthetischem Kraftstoff (28) in dem Kraftstoffgemisch (32) abgeglichen wird,
wobei eine Kraftstoffgemischzuführeinrichtung (39) zum Zuführen des Kraftstoffgemischs (32) zu dem Kraftstofftank (12) freigegeben wird, wenn der Ist-Anteil um maximal eine vorbestimmte zulässige Toleranzabweichung von dem Soll-Anteil abweicht oder
wobei eine Kraftstoffgemischzuführeinrichtung (39) zum Zuführen des Kraftstoffgemischs (32) zu dem Kraftstofftank (12) gesperrt wird, wenn der Ist-Anteil um mehr als eine vorbestimmte zulässige Toleranzabweichung von dem Soll-Anteil abweicht.
